# EUROPÄISCHE PATENTSCHRIFT

(11) **EP 1 321 669 B1**
(45) Veröffentlichungstag und Bekanntmachung des Hinweises auf die Patenterteilung: **11.07.2007**
(21) Anmeldenummer: 02026380.2
(22) Anmeldetag: 25.11.2002
(51) Int. Cl.: F03D 1/00

(54) **System zum Transport und zur Errichtung von Offshore-Windenergieanlagen**
System for the transport and installation of offshore wind turbines
Système de transport et d'installation d'éoliennes marines

(30) Priorität: 18.12.2001 DE 10162226
(43) Veröffentlichungstag der Anmeldung: 25.06.2003
(73) Patentinhaber: PLAMBECK, Norbert, 27472 Cuxhaven (DE)
(72) Erfinder: PLAMBECK, Norbert, 27472 Cuxhaven (DE)
(74) Vertreter: Manitz, Finsterwald & Partner GbR

(56) Entgegenhaltungen:
- EP-A- 1 101 935
- WO-A-02/48547
- DE-U- 20 010 086
- DE-U- 20 100 588
- JENSEN N M: "THE HORNS REV OFFSHORE PROJECT INSTALLATION AND TRANSPORTATION" EWEA SPECIAL TOPIC CONFERENCE ON OFFSHORE WIND ENERGY, XX, XX, 10. Dezember 2001 (2001-12-10), Seiten 1-4, XP001127019

## Beschreibung

Die Erfindung betrifft ein System zum Transport und zur seeseitigen Errichtung von landseitig zumindest im wesentlichen komplettierten Offshore-Windenergieanlagen.

Offshore-Windenergieanlagen kommt zunehmend größere Bedeutung zu, da zum einen die über See herrschenden Windverhältnisse konstanter als an Land sind und zum anderen die häufig kritisierten landschaftlichen Beeinträchtigungen durch Windparks sowie die von derartigen Windparks ausgehenden Geräuschentwicklungen auf See keine Rolle spielen.

Neben der zu gewährleistenden Tauglichkeit von Windenergieanlagen für den Einsatz auf hoher See sowie der erforderlichen Kabelverlegung stellen der Transport und die Errichtung von Offshore-Windenergieanlagen eine der großen Herausforderungen bei der Realisierung derartiger Vorhaben dar.

Das Transportieren und Montieren der Komponenten einer Offshore-Windenergieanlage ist aufgrund von meteorologischen Einflüssen auf See wesentlich schwieriger, zeitaufwändiger und dadurch teuerer als an Land. Die Errichtung des Turms, die Montage von Maschinenhaus, Nabe und Rotorblättern erfordert dabei neben einem hohen Personalaufwand vor allem auch einen hohen und kostspieligen Geräteaufwand, der besonders deshalb zum Tragen kommt, weil aufgrund der ständig schwankenden meteorologischen Bedingungen häufig eine lange Verweilzeit der Geräte, insbesondere der Kräne erforderlich ist, um die vollständige Montage sicherzustellen.

Wesentlich einfacher ist die Montage einer derartigen Windenergieanlage an Land, da an Land die erforderlichen Hebevorrichtungen in Form ausreichend dimensionierter Kräne stets einsatzbereit zur Verfügung stehen und auch der Transport der Einzelkomponenten sowie deren Handling ohne besondere Probleme und auch weitgehend unabhängig von Wetterbedingungen durchführbar ist.

Aus der Gebrauchsmusterschrift 200 10 086 ist es bereits bekannt, komplette Offshore-Windenergieanlagen mittels eines speziell ausgebildeten Schwimmkrans an den seeseitigen Aufstellungsort zu transportieren. Diese Lösung ist jedoch aufgrund der erforderlichen Sonderkonstruktionen sehr aufwändig und setzt voraus, dass die Krananlage so ausgebildet ist, dass die ein hohes Gewicht aufweisende Offshore-Windenergieanlage durch Heb- und Schwenkvorgänge in der erforderlichen Weise umgesetzt werden kann. Da eine derartige aufwändige Krananlage jeweils nur vergleichsweise kurzzeitig im Einsatz ist und hohe, durch die Transportwege bedingte Totzeiten in Kauf genommen werden müssen, erweist sich diese bekannte Methode als ausgesprochen unwirtschaftlich.

Weiterhin ist aus der Schrift "The Horns Rev offshore project - installation and transportation; N.M. Nielsen; Offshore Wind Energy 2001, Special Topic Conference, Brussels, 10-12 December 2001" bekannt, Komponenten für Offshore-Windenergieanlagen mittels Kranplattformen und Kranschiffen an den seeseitigen Aufstellungsort zu transportieren und dort zu montieren.

Aufgabe der Erfindung ist es daher, ein System der eingangs angegebenen Art so auszugestalten, dass die Realisierung einer besonders wirtschaftlichen, logistisch optimalen Fertigungsstrategie ermöglicht wird.

Erfindungsgemäß wird diese Aufgabe nach der Erfindung im wesentlichen gelöst durch die Merkmale der Ansprüche 1 und 12 und insbesondere durch ein System, das sich auszeichnet durch
- wenigstens ein landseitig und insbesondere auf einer Verschiffungspier vorgesehenes Montagefundament zum testfähigen Aufbau einer Offshore-Windenergieanlage,
- einen nach Art einer höhenverstellbaren Hubplattform aufgebauten Schwimmkörper zur Aufnahme und zum seeseitigen Transport wenigstens einer Offshore-Windenergieanlage,
- zumindest einer auf der Hubplattform vorgesehenen, horizontal verfahrbaren Mäklereinheit mit wenigstens einer oberen und einer unteren Aufnahmevorrichtung zur kraftschlüssigen Verbindung mit dem Turm einer Offshore-Windenergieanlage und zur kranlosen Überführung der jeweiligen, vom Montagefundament gelösten Offshore-Windenergieanlage in eine verriegelte Position auf der Hubplattform,
- sowie ein der jeweiligen Offshore-Windenergieanlage zugeordnetes, seeseitiges Arbeitsfundament zur Aufnahme der von der Hubplattform mittels der Mäklereinheit kranlos überführbaren Offshore-Windenergieanlage.

Durch die Verwendung der speziell ausgestatteten Hubplattform als Transport- und Errichtungseinheit ist es problemlos möglich, die erforderliche Anpassung an die unterschiedlichen Höhenverhältnisse der jeweiligen Verschiffungspier sowie des jeweiligen seeseitigen Arbeitsfundaments vorzunehmen. Von besonderer Bedeutung ist dabei, dass aufgrund der vorgesehenen Mäklereinheit sowohl eine kranlose Überführung der jeweiligen Offshore-Windenergieanlage auf die zum Seetransport bestimmte Hubplattform und vor allem eine kranlose Errichtung der Offshore-Windenergieanlage auf dem seeseitigen Arbeitsfundament erfolgen kann.

Während die Windenergieanlage bereits an Land auf einwandfreien Betrieb getestet werden kann, ermöglicht die unkomplizierte Errichtung der stehend oder liegend transportierbaren Gesamtanlage auf dem seeseitigen Arbeitsfundament eine schnelle Inbetriebnahme. Dies bedeutet, dass die Windenergieanlage, die auch schon an Land in Betrieb genommen werden kann, nur kurzzeitig während des Seetransports außer Betrieb sein muss, wobei es prinzipiell sogar möglich ist, die Anlage auch in aufrechter Position auf der Hubplattform zu betreiben.

Von besonderer Bedeutung ist ferner, dass aufgrund des durch die Erfindung bereitgestellten einfachen und schnellen Transportsystems defekte Windenergieanlagen eines Offshore-Windparks wirtschaftlich auch dann noch zur Reparatur an Land gebracht werden können, wenn eine Reparatur auf See technisch im Prinzip zwar möglich, aufgrund von nicht vorhersehbaren Schlechtwetterphasen aber zeitaufwändig und teuer werden kann.

Weitere vorteilhafte Ausgestaltungen der Erfindung sind in den Unteransprüchen angegeben.

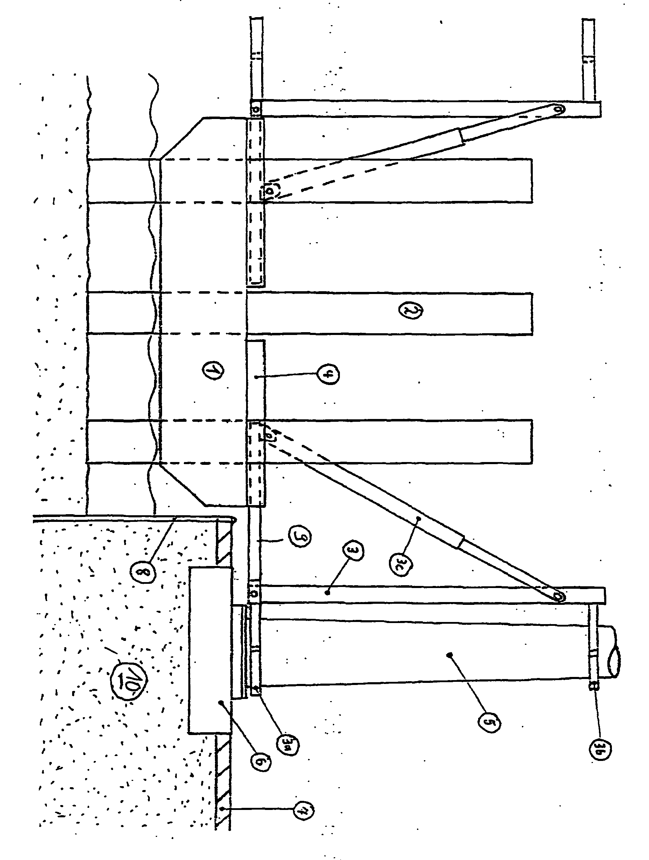

Ein Ausführungsbeispiel der Erfindung wird nachfolgend unter Bezugnahme auf die Zeichnung erläutert, deren einzige Figur in schematischer Weise den Vorgang der Überführung einer Offshore-Windenergieanlage von einem landseitigen Montagefundament auf eine gemäß der Erfindung ausgebildete Hubplattform zeigt.

Nach der Zeichnung ist eine Hubplattform 1 vor einer Verschiffungspier 10 positioniert, und zwar mittels mehrerer vertikal verfahrbarer Hubbeine 2. Die Hubplattform 1 ist schwimmfähig ausgebildet, sie kann einen Eigenantrieb besitzen, jedoch auch in Form einer Schleppeinheit verwendet werden.

Auf der Hubplattform 1 ist zumindest eine so genannte Mäklereinheit vorgesehen, die von wenigstens einem horizontal mittels einer Ausschubeinheit 4 verfahrbaren Basisträger 9, wenigstens einem im wesentlichen vertikal verlaufenden Mäkler 3 sowie zumindest einem Führungs- und Justierstempel 3c besteht, der sich in der dargestellten Position zwischen dem rückseitigen Ende des Basisträgers 3, und dem oberen Bereich des Mäklers 4 erstreckt und an seinen Enden jeweils gelenkig gelagert ist. Der Führungs- und Justierstempel besteht bevorzugt aus einer teleskopartig ausgebildeten Einheit, die vorzugsweise hydraulisch betätigbar ist.

Grundsätzlich ermöglicht die vorgesehene Mäklereinheit Bewegungen in allen Richtungen, und sie ist auch zu einem geringfügigen Anheben und Absenken einer mit ihr verbundenen Offshore-Windenergieanlage geeignet, aber diese Bewegungen werden nur dazu genutzt, um die betreffende Windenergieanlage exakt auf dem jeweiligen Fundament positionieren zu können.

Im Bereich des freien Endes des Basisträgers 9, wo auch der Mäkler 3 gelenkig gelagert ist, ist eine untere Aufnahmevorrichtung 3a vorgesehen, die den Turm 5 einer Windenergieanlage umgreifend mit diesem Turm 5 verriegelt werden kann. Eine entsprechend ausgebildete obere Aufnahmevorrichtung 3b ist im Bereich des oberen Endes des Mäklers 3 vorgesehen.

Die Halteeinrichtungen 3a, 3b sind zum Einstellen einer optimalen Greifposition bezüglich des Turms einer Windenergieanlage in vertikaler Richtung vorzugsweise verfahrbar.

An der seeseitig durch eine Spundwand 8 begrenzten Pier 10 ist ein Montage- und Testfundament 6 vorgesehen, auf dem eine Windenergieanlage funktionstüchtig aufgebaut und auch getestet werden kann. Dieser Aufbau erfolgt mittels der üblichen, an Land zur Verfügung stehenden Einrichtungen, insbesondere Kräne, die an das Fundament 6 aufgrund einer auf dem Pier vorgesehenen Schwerlastoberflächenbefestigung 7 in der erforderlichen Weise herangefahren werden können.

Nachfolgend soll kurz der Verfahrensablauf zur Übernahme einer Offshore-Windenergieanlage vom Montage- und Testfundament 6 auf die Hubplattform 1 sowie die Übergabe der Offshore-Windenergieanlage auf ein seeseitiges Arbeitsfundament geschildert werden.

Zunächst wird dazu die Hubplattform 1 vor der Verschiffungspier 10 positioniert und die Hubplattform mittels der Hubbeine 4 in ihrer Höhe so eingestellt, dass die von einer Ausschubeinheit 4 betätigbaren Basisträger 9 der pierseitig gelegenen ersten Mäklereinheit sich auf dem Niveau der Windenergieanlage befinden, die auf dem pierseitigen Montage- und Testfundament 6 aufgebaut ist.

Die Mäklereinheit wird dann mittels der Ausschubeinheit 4 so weit ausgefahren, dass die oberen und unteren Aufnahmevorrichtungen 3a, 3b mit dem Turm 5 verriegelt werden können. Anschließend erfolgt ein Lösen der Offshore-Windenergieanlage von dem Montage- und Testfundament 6, worauf die Mäklereinheit zusammen mit der Offshore-Windenergieanlage in die Transportposition auf der Hubeinheit 1 eingefahren werden kann, wobei in dieser Transportposition eine Verkippsicherung realisiert wird.

Wenn die Offshore-Windenergieanlage auf der Hubplattform 1 ihre zum Transport bestimmte Position erreicht und demgemäß transportfertig fixiert ist, kann eine Aufnahme von Ballastwasser durch die Hubplattform erfolgen, um diese nach dem Absenken in einen durchgetrimmten Zustand zu überführen. Anschließend erfolgt ein Absenken der Hubplattform bis zur vollständigen Schwimmfähigkeit.

Sind auf der Hubplattform 1 weitere Mäklereinheiten vorgesehen, wie z.B. die im gezeigten Ausführungsbeispiel rückseitig an die erste Mäklereinheit angrenzende zweite Mäklereinheit, dann werden analog der vorher geschilderten Überführung einer Offshore-Windenergieanlage von Land auf die Hubplattform weitere Überführungsvorgänge unter geeigneter Positionierung der Hubplattform bezüglich der Verschiffungspier durchgeführt. Sind alle zu transportierenden Offshore-Windenergieanlagen auf die Hubplattform 1 überführt und auf dieser in der erforderlichen Weise bei aufrechter Position gegen Kippen fixiert, erfolgt das Ballastieren der Hubplattform und das Versegeln der seefest ausgestalteten Hubplattform zur jeweiligen seeseitigen Lokation, entweder mit Eigenantrieb oder durch Schleppen.

Bei Ankunft an der seeseitigen Lokation wird die Hubplattform 1 vor dem jeweils mit einer Windenergieanlage zu bestückenden Arbeitsfundament positioniert, und es wird dann die Hubplattform mittels ihrer Hubbeine in ihrer Hubhöhe derart eingestellt, dass sich die Mäklereinheit mit der von ihr gehaltenen bzw. getragenen Windenergieanlage auf Fundamentflänschniveau befindet. Durch Ausschieben der Basisträger 9 der Mäklereinheit wird die Windenergieanlage über den Fundamentflansch des Arbeitsfundaments gebracht, und es kann eine Feinpositionierung und Absetzen der Windenergieanlage über diesem Flansch mit Hilfe der Mäklereinheit erfolgen. Nach dem Verschrauben der Offshore-Windenergieanlage mit dem Arbeitsfundament erfolgt ein Entriegeln der Aufnahmevorrichtungen 3a, 3b, ein Ballastieren der Hubplattform sowie ein Einfahren der Mäklereinheit. Die Hubplattform kann dann wiederum bis zur vollständigen Schwimmfähigkeit abgesenkt und zum nächsten, mit einer Windenergieanlage zu bestückenden Arbeitsfundament versegelt werden.

Die Verbindungs- bzw. Kupplungseinheit zwischen der jeweiligen Windenergieanlage und dem land- bzw. seeseitigen Fundament wird bevorzugt standardisiert ausgeführt, wozu vorzugsweise nicht nur eine Kraftschlusssondern auch eine Formschlussverbindung vorsehen ist. Auf diese Weise ergibt sich schon während der Übernahme bzw. Übergabevorgänge eine stabilisierende Halterung des Turms der Windenergieanlage, was insbesondere auf See von Vorteil ist. Für den Fall, dass die Windenergieanlage während des Seetransports in liegender Position fixiert war, muss natürlich vor der Überführung auf das Arbeitsfundament ein Aufrichten der Offshore-Windenergieanlage durch die Mäklereinheit in eine senkrechte Position erfolgen. Der Hauptvorteil eines liegenden Transports einer Offshore-Windenergieanlage liegt darin, dass dabei ein für den Transport günstiger niedriger Schwerpunkt erhalten wird, so dass Transporte auch bei schlechtem Wetter durchgeführt werden können, wenn ein Transport von aufrechtstehenden Windenergieanlagen nicht mehr möglich ist.

Das erfindungsgemäße System eignet sich nicht nur zur Errichtung neuer seeseitiger Windenergieanlagen, sondern ermöglicht auch eine schnelle Auswechslung eventuell defekter Anlagen, so dass nur geringe Stillstandszeiten in Kauf genommen werden müssen und die Produktivität eines Offshore-Windparks auf hohem Level gehalten werden kann.

### Bezugszeichenliste

- 1: Hubplattform
- 2: Hubbein
- 3: Mäkler
- 3a: untere Aufnahmevorrichtung
- 3b: obere Aufnahmevorrichtung
- 3c: Führungs- und Justierstempel
- 4: Ausschubeinheit
- 5: Turm einer Offshore-Windenergieanlage
- 6: Montage- und Testfundament
- 7: Schwerlast-Oberflächenbefestigung
- 8: Spundwand
- 9: Basisträger
- 10: Pier

## Patentansprüche

1. System zum Transport und zur seeseitigen Errichtung von landseitig zumindest im wesentlichen komplettierten Offshore-Windenergieanlagen, umfassend
- wenigstens ein landseitig und insbesondere auf einer Verschiffungspier (10) vorgesehenes Montagefundament (6) zum testfähigen Aufbau einer Offshore-Windenergieanlage,
- einen nach Art einer höhenverstellbaren Hubplattform (1) aufgebauten Schwimmkörper zur Aufnahme und zum seeseitigen Transport wenigstens einer Offshore-Windenergieanlage,
- sowie ein der jeweiligen Offshore-Windenergieanlage zugeordnetes; seeseitiges Arbeitsfundament zur Aufnahme der Offshore-Windenergieanlage,
**gekennzeichent durch**
- zumindest eine auf der Hubplattform (1) vorgesehene, horizontal verfahrbare Mäklereinheit (9, 3, 3c) mit wenigstens einer oberen und einer unteren Aufnahmevorrichtung (3a, 3b) zur kraftschlüssigen Verbindung mit dem Turm (5) einer Offshore-Windenergieanlage und zur kranlosen Überführung der jeweiligen, vom Montagefundament (6) gelösten Offshore-Windenergieanlage in eine verriegelte Position auf der Hubplattform (1).

2. System nach Anspruch 1,
**dadurch gekennzeichnet,**
**dass** die Mäklereinheit neben zumindest einem im wesentlichen horizontal verlaufenden Basisträgern (9) wenigstens einen am Basisträger (9) gelenkig angelenkten, im wesentlichen vertikal stehenden Mäkler (3) und zumindest einen schräg zwischen Basisträger (3) und Mäkler verlaufenden Führungs- und Justierstempel (3c) umfasst.

3. System nach Anspruch 2,
**dadurch gekennzeichnet,**
**dass** der die Aufnahmevorrichtungen (3, 3a) für den Turm (5) tragende Mäkler (3) über den Führungs- und Justierstempel (3c) verschwenkbar und begrenzt höhenverstellbar ist.

4. System nach einem der vorhergehenden Ansprüche,
**dadurch gekennzeichnet,**
**dass** auf der Hubplattform (1) zwei Mäklereinheiten bzw. mehrere Paare derartiger Mäklereinheiten vorgesehen sind, die rückseitig einander zugewandt und jeweils über einander gegenüberliegende Seiten der Hubplattform (1) hinaus ausfahrbar sind.

5. System nach einem der vorhergehenden Ansprüche,
**dadurch gekennzeichnet,**
**dass** der Turm (5) mit dem Montagefundament (6) und dem Arbeitsfundament und gegebenenfalls einem auf der Hubplattform (1) vorgesehenen Transportfundament über einheitliche Flansch- oder Kupplungselemente verbindbar ist.

6. System nach einem der Ansprüche 1 bis 4,
**dadurch gekennzeichnet,**
**dass** der Turm (5) mit dem Montagefundament (6) und dem Arbeitsfundament und gegebenenfalls einem auf der Hubplattform (1) vorgesehenen Transportfundament über einheitliche, ineinanderschiebbare Formschluss-Kupplungselemente, insbesondere nach Art einer Schwalbenschwanzführung, verbindbar ist.

7. System nach einem der vorhergehenden Ansprüche,
**dadurch gekennzeichnet,**
**dass** der die Hubplattform (1) umfassende Schwimmkörper eine Mehrzahl von vertikal verstellbaren Hubbeinen (2) aufweist, über die in der Übernahme- oder Übergabeposition für die Offshore-Windenergieanlage die Höhenposition des horizontal verfahrenbaren Basisträgers (9) der Mäklereinheit der Höhenposition des Befestigungsbereichs für die untere Aufnahmevorrichtung (3) am Turm (5) anpassbar ist.

8. System nach einem der vorhergehenden Ansprüche,
**dadurch gekennzeichnet,**
**dass** der die Hubplattform (1) umfassende Schwimmkörper zur Aufnahme von Ballastwasser zu Ballastierungs- und Trimmzwecken ausgebildet ist.

9. System nach einem oder mehreren der vorhergehenden Ansprüche,
**dadurch gekennzeichnet,**
**dass** landseitig eine Mehrzahl von für die Mäklereinheit einer pierseitig verankerten Hubplattform (1) zur Übernahme einer Offshore-Windenergieanlage zugängliche Montage- und Testfundamenten (6) vorgesehen ist.

10. System nach einem der vorhergehenden Ansprüche,
**dadurch gekennzeichnet,**
**dass** die Offshore-Windenergieanlage in aufrechter Position auf der Hubplattform (1) fixier- und transportierbar ist.

11. System nach einem der Ansprüche 1 bis 9,
**dadurch gekennzeichnet,**
**dass** die Offshore-Windenergieanlage über die mittels des Führung- und Justierstempels (3) in eine Schwenklage überführte Mäklereinheit liegend transportierbar ist.

12. Verfahren zum Transport und zur seeseitigen Errichtung von landseitig zumindest im wesentlichen komplettierten Offshore-Windenergieanlagen, mit den Schritten:
- Aufbauen wenigstens einer testfähigen Offshore-Windenergieanlage auf wenigstens einem landseitig und insbesondere auf einer Verschiffungspier (10) vorgesehenen Montagefundament (6),
- Aufnehmen wenigstens einer Offshore-Windenergieanlage auf einem nach Art einer höhenverstellbaren Hubplattform (1) aufgebauten Schwimmkörper zum seeseitigen Transport,
- Aufnehmen einer Offshore-Windenergieanlage auf ein jeweils zugeordnetes, seeseitiges Arbeitsfundament von der Hubplattform (1),
**gekennzeichent durch** die Schritte:
- kranloses Überführen wenigstens einer vom Montagefundament (6) gelösten Offshore-Windenergieanlage in eine verriegelte Position auf der Hubplattform (1) mittels zumindest einer auf der Hubplattform (1) vorgesehenen, horizontal verfahrbaren Mäklereinheit (9, 3, 3c) mit wenigstens einer oberen und einer unteren Aufnahmevorrichtung (3a, 3b) zur kraftschlüssigen Verbindung mit dem Turm (5) einer Offshore-Windenergieanlage, und
- kranloses Überführen wenigstens einer Offshore-Windenergieanlage auf das jeweils zugeordnete, seeseitige Arbeitsfundament von der Hubplattform (1) mittels der Mäklereinheit (9, 3, 3c).

## Claims

1. A system for the transport and for the erection at sea of offshore wind energy plants completed at least substantially on the landside, comprising
- at least one assembly foundation (6) provided at the land side, and in particular on a shipping pier (10) for the testable assembly of an offshore wind energy plant;
- a floating body assembled in the manner of a vertically adjustable lifting platform (1) for the reception and for the transport at sea of at least one offshore wind energy plant;
- as well as a working foundation at sea associated with the respective offshore wind energy plant for the reception of the offshore wind energy plant,
**characterised by**
- at least one horizontally movable mast unit (9, 3, 3c) provided on the lifting platform and having at least one upper and one lower receiving apparatus (3a, 3b) for the force-transmitting connection to the tower (5) of an offshore wind energy plant and for the craneless transport of the respective offshore wind energy plant released from the assembly foundation (6) into a latched position on the lifting platform (1).

2. A system in accordance with claim 1, **characterised in that** the mast unit includes, in addition to at least one essentially horizontally extending base carrier (9), at least one substantially vertically standing mast (3) pivotally connected to the base carrier (9) and at lest one guiding and adjustment prop (3c) extending obliquely between the base carrier (3) and the mast.

3. A system in accordance with claim 2, **characterised in that** the mast (3) supporting the receiving apparatuses (3, 3a) for the tower (5) is pivotable and limitedly vertically adjustable via the guiding and adjustment prop (3c).

4. A system in accordance with any one of the preceding claims, **characterised in that** two mast units or a plurality of pairs of such mast units are provided on the lifting platform (1) and are facing one another at the rear side and can each be moved out beyond mutually opposite sides of the lifting platform (1).

5. A system in accordance with any one of the preceding claims, **characterised in that** the tower (5) can be connected to the assembly foundation (6) and the working foundation and, optionally, to a transport foundation provided on the lifting platform (1) via uniform flange or coupling elements.

6. A system in accordance with any one of the claims 1 to 4, **characterised in that** the tower (5) can be connected to the assembly foundation (6) and the working foundation and, optionally, to a transport foundation provided on the lifting platform via uniform shaped matched coupling elements which can be pushed into one another, in particular in the manner of a dovetail joint.

7. A system in accordance with any one of the preceding claims, **characterised in that** the floating body comprising the lifting platform (1) has a plurality of vertically adjustable lifting legs (2) via which the vertical position of the horizontally movable base carrier (9) of the mast unit can be matched in the takeover position or transfer position for the offshore wind energy plant to the vertical position of the fastening region for the lower receiving apparatus (3) at the tower (5).

8. A system in accordance with any one of the preceding claims, **characterised in that** the floating body comprising the lifting platform (1) is configured for the reception of ballast water for ballast and trim purposes.

9. A system in accordance with one or more of the preceding claims, **characterised in that** a plurality of assembly and test foundations (6) are provided on the landside which are accessible for the mast unit of a lifting platform (1) anchored on the pier side for the takeover of an offshore wind energy plant.

10. A system in accordance with any one of the preceding claims, **characterised in that** the offshore wind energy plant can be fixed and transported in an upright position on the lifting platform (1).

11. A system in accordance with any one of the claims 1 to 9, **characterised in that** the offshore wind energy plant can be transported in a lying position via the mast unit moved into a pivot position by means of the guiding and adjustment prop (3).

12. A method for the transport and for the erection at sea of offshore wind energy plants at least substantially completed at the landside, comprising the steps:
- assembling at least one testable offshore wind energy plant on at least one assembly foundation (6) provided on the landside and in particular on a shipping pier (10);
- receiving at least one offshore wind energy plant on a floating body assembled in the manner of a vertically adjustable lifting platform (1) for transport at sea;
- receiving an offshore wind energy plant from the lifting platform (1) on a respectively associated working foundation at sea,
**characterised by** the steps:
- craneless moving of at least one offshore wind energy plant released from the assembly foundation (6) into a latched position on the lifting platform (1) by means of at least one horizontally movable mast unit (9, 3, 3c) provided on the lifting platform (1) and having at least one upper and one lower receiving apparatus (3a, 3b) for the force-transmitting connection to the tower (5) of an offshore wind energy plant; and
- craneless moving of at least one offshore wind energy plant from the lifting platform (1) to the respectively associated working foundation at sea by means of the mast unit (9, 3, 3c).

## Revendications

1. Système pour le transport et pour l'érection en mer d'installations éoliennes off-shore qui ont été au moins essentiellement complétées à terre, comprenant :
- au moins une fondation de montage (6) prévue à terre et en particulier sur un quai de transbordement (10) pour le montage d'une installation éolienne offshore à des fins de tests,
- un corps flottant construit à la manière d'une plate-forme de levage (1) déplaçable en hauteur pour la réception et pour le transport en mer d'au moins une installation éolienne offshore,
- et une fondation de travail en mer associée à l'installation éolienne offshore respective pour recevoir l'installation éolienne offshore,
**caractérisé par** :
- au moins une unité à jumelle (9, 3, 3c) prévue sur la plate-forme de levage (1) et déplaçable horizontalement avec au moins un dispositif récepteur supérieur et un dispositif récepteur inférieur (3a, 3b) pour la liaison en coopération de force avec la tour (5) d'une installation éolienne offshore et pour le transfert sans grue de l'installation éolienne offshore respective, détachée de la fondation de montage (6), dans une position verrouillée sur la plate-forme de levage (1).

2. Système selon la revendication 1,
**caractérisé en ce que** l'unité à jumelle comprend, outre au moins un support de base (9) qui s'étend essentiellement horizontalement, au moins une jumelle (3) montée articulée sur le support de base (9) et debout essentiellement verticalement, et au moins un poussoir de guidage et d'ajustement (3c) qui s'étend en oblique entre le support de base (3) et la jumelle.

3. Système selon la revendication 2,
**caractérisé en ce que** la jumelle (3) qui porte les dispositifs de réception (3, 3a) pour la tour (5) est capable de pivoter et d'être déplacée en hauteur de façon limitée via le poussoir de guidage et d'ajustement (3c).

4. Système selon l'une des revendications précédentes,
**caractérisé en ce qu'**il est prévu sur la plate-forme de levage (1) deux unités à jumelle, ou plusieurs paires de telles unités à jumelle qui sont tournées dos à dos l'une vers l'autre et qui peuvent être déplacées respectivement au-delà des côtés mutuellement opposés de la plate-forme de levage (1).

5. Système selon l'une des revendications précédentes,
**caractérisé en ce que** la tour (5) est susceptible d'être reliée à la fondation de montage (6) et à la fondation de travail, et le cas échéant à une fondation de transport prévue sur la plate-forme de levage (1) via des éléments de bridage ou d'accouplement unitaires.

6. Système selon l'une des revendications 1 à 4,
**caractérisé en ce que** la tour (5) peut être reliée à la fondation de montage (6) et à la fondation de travail, et le cas échéant à une fondation de transport prévue sur la plate-forme de levage (1) via des éléments d'accouplement unitaires à coopération de formes susceptibles d'être enfilés les uns dans les autres, en particulier à la manière d'un guidage à queue d'aronde.

7. Système selon l'une des revendications précédentes,
**caractérisé en ce que** le corps flottant qui comprend la plate-forme de levage (1) comprend une pluralité de pieds de levage (2) déplaçables verticalement, via lesquels, dans la position de reprise ou de présentation pour l'installation éolienne offshore, la position en hauteur du support de base (9), déplaçable horizontalement, de l'unité à jumelle, peut être adaptée à la position en hauteur de la zone de fixation pour le dispositif de réception inférieur (3) sur la tour (5).

8. Système selon l'une des revendications précédentes,
**caractérisé en ce que** le corps flottant qui comprend la plate-forme de levage (1) est réalisé pour la réception d'eau de ballast dans le but de réaliser un ballast et de correction d'assiette.

9. Système selon l'une ou plusieurs des revendications précédentes,
**caractérisé en ce qu'**il est prévu à terre une pluralité de fondations de montage et de test (6) accessibles par l'unité à jumelle d'une plate-forme de levage (1) ancrée côté quai pour la reprise d'une installation éolienne offshore.

10. Système selon l'une des revendications précédentes,
**caractérisé en ce que** l'installation éolienne offshore est susceptible d'être fixée et transportée en position dressée sur la plate-forme de levage (1).

11. Système selon l'une des revendications 1 à 9,
**caractérisé en ce que** l'installation éolienne offshore est susceptible d'être transportée couchée via l'unité à jumelle transférée dans une position pivotée au moyen du poussoir de guidage et d'ajustement (3).

12. Procédé pour le transport et pour l'érection en mer d'installations éoliennes off-shore qui ont été au moins essentiellement complétées à terre, comprenant les étapes suivantes :
- construction d'au moins une installation éolienne offshore capable d'être testée sur au moins une fondation de montage (6) prévue à terre et en particulier sur un quai de transbordement (10),
- réception d'au moins une installation éolienne offshore sur un corps flottant destiné au transport en mer et réalisé à la manière d'une plate-forme de levage (1) réglable en hauteur,
- réception d'une installation éolienne offshore sur une fondation de travail respective associée, en mer, depuis la plate-forme de levage (1),
**caractérisé par** les étapes suivantes :
- transfert sans grue d'au moins une installation éolienne offshore détachée de la fondation de montage (6) dans une position verrouillée sur la plate-forme de levage (1) à l'aide d'au moins une unité à jumelle (9, 3, 3c) prévue sur la plate-forme de levage (1) et déplaçable horizontalement, avec au moins un dispositif récepteur supérieur et un dispositif récepteur inférieur (3a, 3b) pour la liaison à coopération de force avec la tour (5) d'une installation éolienne offshore, et
- transfert sans grue d'au moins une installation éolienne offshore vers la fondation de travail respective associée, en mer, depuis la plate-forme de levage (1) au moyen de l'unité à jumelle (9, 3, 3c).
